(19) **Europäisches Patentamt**
**European Patent Office**
**Office européen des brevets**

(11) **EP 4 745 770 A1**

(12) **EUROPEAN PATENT APPLICATION**

(43) Date of publication:
**20.05.2026 Bulletin 2026/21**

(51) International Patent Classification (IPC):
**G06F 9/48** *(2006.01)* **G06F 9/50** *(2006.01)*

(21) Application number: **25211341.0**

(22) Date of filing: **27.10.2025**

(52) Cooperative Patent Classification (CPC):
**G06F 9/4893; G06F 9/5094**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **14.11.2024 CN 202411630593**

(71) Applicant: **GUANGDONG OPPO MOBILE TELECOMMUNICATIONS CORP., LTD.**
**Dongguan, Guangdong 523860 (CN)**

(72) Inventors:
• **Yangyang, Yan**
**Dongguan,Guangdon, 523860 (CN)**
• **Yu, Qing**
**Dongguan,Guangdon, 523860 (CN)**

(74) Representative: **Grassi, Stefano**
**Bugnion S.p.A.**
**Viale Lancetti, 17**
**20158 Milano (IT)**

(54) **TASK SCHEDULING METHOD AND APPARATUS, COMPUTER DEVICE, AND STORAGE MEDIUM**

(57) Provided are a task scheduling method a computer device, and a storage medium. In the task scheduling method, a task for which core selection is to be performed is acquired. It is determined whether there is an optimal core for the task, where the optimal core is obtained by performing core selection in a global optimal core selection manner, and the global optimal core selection manner is a core selection manner that results in a lowest system energy consumption and that is obtained by performing core selection on multiple historical core-selection tasks in different orders. When there is an optimal core for the task, the task is processed with the optimal core.

FIG. 2

## Description

TECHNICAL FIELD

Embodiments of the present disclosure relate to technologies of selecting a processor core, and particularly to a task scheduling method and apparatus, a computer device, and a storage medium.

BACKGROUND

In the process of task scheduling, it is usually necessary to assign each task with a corresponding processor core, and then the task is executed using its assigned processor core.

In the related art, when assigning processor cores to tasks, the core selection is performed according to the current operating status of the processor.

However, this selection method may lead to increased power consumption of the processor and loss of energy efficiency.

SUMMARY

In view of this, embodiments of the present disclosure provide a task scheduling method and apparatus, a computer device, and a storage medium. The invention is set out in the appended set of claims.

In the task scheduling method and apparatus, the computer device and the computer-readable storage medium provided in the embodiments of the present disclosure, a task for which core selection is to be performed is acquired, and it is determined whether there is an optimal core for the task for which core selection is to be performed; and when there is an optimal core for the task for which core selection is to be performed, the task for which core selection is to be performed is processed with the optimal core. Since the optimal core is obtained by performing core selection in a global optimal core selection manner, and the global optimal core selection manner is a core selection manner that results in a lowest system energy consumption and that is obtained performing core selection, in different orders, on multiple historical core-selection tasks, the processing the task for which core selection is to be performed with the optimal core can ensure that the processor works with the global lowest power consumption, thereby reducing the power consumption of the processor and decreasing the loss of energy efficiency of the processor.

BRIEF DESCRIPTION OF THE DRAWINGS

To more clearly illustrate technical solutions in the embodiments of the present disclosure, drawings required in the description of the embodiments will be briefly introduced below. Apparently, the drawings in the following description illustrate only some embodiments of the present disclosure. For those of ordinary skill in the art, other drawings can be obtained according to these drawings without paying creative work.

FIG. 1 is a schematic diagram illustrating an application scenario of a task scheduling method provided in the embodiments of the present disclosure.

FIG. 2 is a schematic flowchart of the task scheduling method provided in the embodiments of the present disclosure.

FIG. 3 is a schematic flowchart of determining optimal cores for historical core-selection tasks as provided in the embodiments of the present disclosure.

FIG. 4 is a schematic flowchart of determining sorted queues of all tasks as provided in the embodiments of the present disclosure.

FIG. 5 is a schematic flowchart of determining sorted queues of partial tasks as provided in the embodiments of the present disclosure.

FIG. 6 is a schematic flowchart of processing a task for which core selection is to be performed with an optimal core as provided in the embodiments of the present disclosure.

FIG. 7 is a schematic flowchart of determining a selection state of a processor core as provided in the embodiments of the present disclosure.

FIG. 8 is a schematic structural diagram of a task scheduling apparatus provided in the embodiments of the present disclosure.

FIG. 9 is a schematic structural diagram of a computer device provided in the embodiments of the present disclosure.

DETAILED DESCRIPTION OF PREFERRED EMBODIMENTS

To make the objectives, technical solutions, and advantages of the embodiments of the present disclosure clearer, the specific technical solutions of the present disclosure will be further described clearly and comprehensively with reference to the accompanying drawings in the embodiments of the present disclosure. The embodiments described below are used to illustrate the present disclosure, but are not intended to limit the scope of the present disclosure.

Unless otherwise defined, all technical and scientific terms used herein have the same meaning as commonly understood by those skilled in the technical field of the present disclosure. The terms used herein are only for describing the embodiments of the present disclosure, and are not intended to limit the present disclosure.

In the following description, references to "some embodiments" indicate a subset of all possible embodiments, but it is understandable that "some embodiments" may be the same subset or different subsets of all possible embodiments, and they may be combined with each other without conflict.

It is noted that terms "first/second/third" involved in the embodiments of the present disclosure are used to distinguish similar or different objects, and do not represent a specific order of objects. It is understandable that "first/second/third" may exchange specific orders or sequences when allowed, so that the embodiments of the present disclosure described herein may be implemented in an order other than that shown or described herein.

It is noted that the task scheduling method provided in the embodiments of the present disclosure may be applied to any terminal device.

The terminal device may include, but is not limited to, a mobile phone, a wearable device (such as a smart watch, a smart bracelet, and smart glasses), a tablet computer, a notebook computer, a vehicle-mounted terminal, a personal computer (PC), and the like. Functions implemented by the method may be implemented by a processor in the terminal device through calling program codes, and the program codes certainly may be stored in a computer storage medium. The terminal device at least includes a processor and a storage medium.

For the processor of the terminal device, it may be provided with multiple processor cores, that is, it is a multi-core processor. In the process of executing tasks, each task may be assigned to one of the processor cores for execution. The actual application scenario of the task scheduling method provided in the embodiments of the present disclosure is explained below.

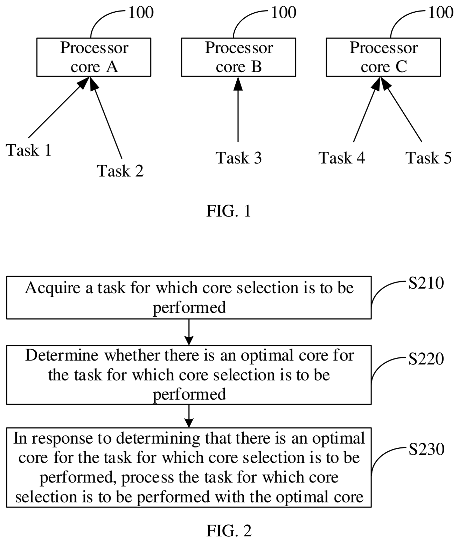

FIG. 1 is a schematic diagram illustrating an application scenario of the task scheduling method provided in the embodiments of the present disclosure. As illustrated in FIG. 1, the scenario includes a processor of a terminal device, where the processor includes multiple processor cores 100, and each processor core is capable of executing a task(s) assigned thereto.

For example, as illustrated in FIG. 1, processor core A can execute Task 1 and Task 2, processor core B can execute Task 3, and processor core C can execute Task 4 and Task 5.

In actual implementations, core selection may be performed for each task according to requirements such as power consumption and speed, that is, a processor core that is to be used to execute the task is determined, and then the task is assigned to the corresponding processor core for processing.

It is noted that, in the related art, taking the terminal device being a mobile phone as an example, in the process of performing core selection for each task, an energy aware scheduling (EAS) method may be used to perform the core selection for the task.

This core selection method may select, using EAS, for a task one processor core that "reduces power consumption while providing satisfied performance" after the task is woken up or satisfies another condition(s). The specific selection method is as follows.

First, a list of processor cores capable of executing a current task may be selected, where the list of processor cores may include multiple selectable processor cores.

Second, a total energy consumption of the entire system produced when the current task was executed in its previous running process with its corresponding selected processor core may be calculated.

Then, one processor core among the list of processor cores that will result in a lowest total system energy consumption when executing the current task may be determined for the current running process of the current task, and the total system energy consumption calculated for the previous running process may be compared with a total system energy consumption that will be produced on condition that the current task is executed with the determined one processor core for the current running process.

If the total system energy consumption that will be produced when using the determined one processor core in the current running process is 3% less than the total system energy consumption that was produced when using the processor core selected in the previous running process, the processor core among the list of processor cores that will result in the lowest total system energy consumption when executing the current task may be selected as a processor core to execute the current task; otherwise, the processor core used in the previous running process of the task is used.

In the selection performed with the above method, the selected processor core is optimal in terms of energy under the current system state, that is, it is a current optimal solution for the system at the current time. However, the current optimal solution is not necessarily a global optimal solution, which is illustrated through the following example.

Referring to Table 1, it illustrates 5 processor cores (CPU0-CPU4) of a system as provided in the embodiments of the present disclosure, where CPU0 and CPU1 are in a small core cluster, and CPU2, CPU3, and CPU4 are in a large core cluster.

Table 1

| Processor Core | Operating Frequency and Computing Power |
|---|---|
| CPU0 | Maximum frequency 1.5 GHz, maximum computing power 300 |
| CPU1 | Maximum frequency 1.5 GHz, maximum computing power 300 |
| CPU2 | Maximum frequency 3 GHz, maximum computing power 1024 |
| CPU3 | Maximum frequency 3 GHz, maximum computing power 1024 |
| CPU4 | Maximum frequency 3 GHz, maximum computing power 1024 |

Among them, each of CPU0 and CPU1 has a maximum frequency of 1.5 GHz and has a maximum computing power of 300, and each of CPU2, CPU3, and CPU4 has a maximum frequency of 3 GHz and has a maximum computing power of 1024.

Assuming that after core selection for Task 1 (load 400), Task 2 (load 300), Task 3 (load 400), and Task 4 (load 300), Task 1 runs on CPU2, Task 2 runs on CPU3, Task 3 runs on CPU4, and Task 4 runs on CPU2, in this case, a current operating frequency may be obtained according to a calculation formula for operating frequency, and the specific formula is as follows:

$$F=1.25 \times A \times B/C,$$

, where F is the operating frequency of a current cluster where a processor core is located, A is the maximum frequency of the current cluster, B is the maximum load of the current cluster, and C is the maximum computing power of the current cluster.

When Task 1, Task 2, Task 3, and Task 4 are executed, the task execution statuses of the processor cores are as illustrated in Table 2.

Table 2

| Processor Core | Executed Tasks |
|---|---|
| CPU2 | Task 1, Task 4 |
| CPU3 | Task 2 |
| CPU4 | Task 3 |

Based on the above formula, the operating frequency of the current cluster where CPU2 is located is calculated as 2.56 GHz, the operating frequency of the current cluster where CPU3 is located is calculated as 1.1 GHz, and the operating frequency of the current cluster where CPU4 is located is calculated as 1.46 GHz. The operating frequency of the entire system is the highest operating frequency of all processor cores, so the operating frequency of the entire system is 2.56 GHz.

The higher the operating frequency of the entire system, the higher the system energy consumption; correspondingly, the lower the operating frequency of the entire system, the lower the energy consumption of system.

In this case, if Task 5 (load 600) is generated, according to the EAS algorithm, CPU3 or CPU4 will be selected. For example, if CPU3 is selected, the maximum load of the large core cluster becomes 1000, and the frequency of the large core cluster is increased to 3 GHz, that is, the operating frequency of the entire system becomes 3 GHz.

After Task 5 is generated and the core selection is performed using the EAS method, the tasks executed by each processor core are as illustrated in Table 3.

Table 3

| Processor Core | Executed Tasks |
|---|---|
| CPU2 | Task 1, Task 4 |
| CPU3 | Task 2, Task 5 |
| CPU4 | Task 3 |

However, if Task 3 is migrated to CPU3 and Task 5 is migrated to CPU4, the tasks executed by each processor core are as illustrated in Table 4.

Table 4

| Processor Core | Executed Tasks |
| --- | --- |
| CPU2 | Task 1, Task 4 |
| CPU3 | Task 2, Task 3 |
| CPU4 | Task 5 |

In this case, the operating frequency of the system obtained using the above calculation formula is 2.56 Hz, which is lower than the 3 GHz obtained using the EAS solution.

That is to say, although EAS can ensure that each core selection is the optimal selection in terms of energy efficiency at the current state, it cannot ensure that the energy efficiency of the entire cluster or the entire system is optimal after each EAS selection. The timing and order of core selection for a task would affect whether the overall energy efficiency is optimal. The core selection method used in the related art cannot obtain the global optimal core selection result due to the above problems.

To solve the above problems existing in the related art, the embodiments of the present disclosure provide a task scheduling method. Feasible implementations of the task scheduling method provided in the embodiments of the present disclosure are explained below.

FIG. 2 is a schematic flowchart of the task scheduling method provided in the embodiments of the present disclosure. As illustrated in FIG. 2, the task scheduling method includes operations S210-S230.

At S210, a task for which core selection is to be performed is acquired.

It is noted that this method may be implemented by the above-mentioned terminal device, and the processor of the terminal device may have multiple processor cores.

In some implementations, the task for which core selection is to be performed may be any woken-up task. For example, after a task is woken up, it would be assigned to a corresponding processor core for execution. The task for which core selection is to be performed is a task that has not yet been assigned with a processor core after being woken up.

For example, in a case of calling Task A, Task A may be woken up, and then Task A may be taken as a task for which core selection is to be performed, and the task scheduling method provided in the embodiments of the present disclosure is used to determine a processor core for Task A.

At S220, it is determined whether there is an optimal core for the task for which core selection is to be performed.

It is noted that, after acquiring the task for which core selection is to be performed, it may be determined whether there is an optimal core for the task for which core selection is to be performed. For example, mapping relationships between tasks and optimal cores may be stored, and it may be determined, by searching the mapping relationships, whether there is an optimal core for the task for which core selection is to be performed.

If there is a mapping relationship for the task for which core selection is to be performed, the optimal core for the task for which core selection is to be performed may be determined based on the mapping relationship. If there is no mapping relationship for the task for which core selection is to be performed, it may be determined that there is no optimal core for the task for which core selection is to be performed.

The optimal core is obtained by performing core selection in a global optimal core selection manner, and the global optimal core selection manner is a core selection manner that results in the lowest system energy consumption and that is obtained by performing core selection, in different orders, on multiple historical core-selection tasks.

It is noted that the global optimal core selection manner is different from the aforementioned EAS core selection method. With the global optimal core selection manner, the selected processor core is not a current optimal processor core but a global optimal processor core. The task for which core selection is to be performed is executed with the global optimal processor core, which can reduce the power consumption of the entire system.

The multiple historical core-selection tasks may be any tasks that have historically undergone core selection in the system. In the process of determining the global optimal solution, these historical core-selection tasks may be sorted, core selection is performed according to each sorted order in the current optimal core selection manner (i.e., using the EAS core selection method), and the system power consumption corresponding to each core selection order (which is the same as a respective sorted order) is obtained; then, a core selection manner corresponding to a core selection order that results in the lowest system power consumption is used as the global optimal core selection manner.

For example, if there are 7 historical core-selection tasks, the 7 tasks may be shuffled and sorted to obtain 7! sorted results, and then core selection may be performed on the tasks according to each sorted result. As such, a core selection manner corresponding to a core selection order that results in the lowest power consumption is used as the global optimal core selection manner. In this manner, an optimal core may be determined for each historical core-selection task, and the mapping relationships between the historical core-selection tasks and their optimal cores may be stored.

If the task for which core selection is to be performed is a task the same as one of the multiple historical core-selection tasks, the stored mapping relationships may be searched to determine whether there is an optimal core for the task for which core selection is to be performed. If a mapping relationship between an optimal core and the same one task among the multiple historical core-selection tasks is searched, the optimal core in the searched mapping relationship may be determined as the optimal core for the acquired task, that is, it may be determined that there is an optimal core for the acquired task.

At S230, in response to determining that there is an optimal core for the task for which core selection is to be performed, the task for which core selection is to be performed is processed with the optimal core.

It is noted that, when it is determined that there is an optimal core for the task for which core selection is to be performed, the optimal core may be used to process the task for which core selection is to be performed. For example, the task for which core selection is to be performed may be assigned to the optimal core, and the optimal core executes the task.

In some embodiments, if there are multiple optimal cores for the task for which core selection is to be performed, the task for which core selection is to be performed may be assigned to any one of the optimal cores for processing.

In the task scheduling method provided in the embodiments of the present disclosure, a task for which core selection is to be performed is acquired, and it is determined whether there is an optimal core for the task for which core selection is to be performed. When there is an optimal core for the task for which core selection is to be performed, the task for which core selection is to be performed is processed with the optimal core. Since the optimal core is obtained by performing core selection in the global optimal core selection manner, and the global optimal core selection manner is a core selection manner that results in the lowest system energy consumption and that is obtained performing core selection on the multiple historical core-selection tasks in different orders, the processing the task for which core selection is to be performed with the optimal core can ensure that the processor works with the global lowest power consumption, thereby reducing the power consumption of the processor and decreasing the loss of energy efficiency of the processor.

In some embodiments, before acquiring the task for which core selection is to be performed, the method further includes: obtaining an optimal core for each historical core-selection task by performing core selection on the multiple historical core-selection tasks in the global optimal core selection manner, where each historical core-selection task is a task in a historical time period that has historically undergone core selection.

It is noted that the optimal core may be recorded and stored by the terminal device in the process of executing the multiple historical core-selection tasks.

For example, for the terminal device, multiple tasks are executed for each frame, and correspondingly, core selection is performed multiple times for the tasks of each frame. After a previous frame is processed, all tasks executed for the previous frame may be used as multiple historical core-selection tasks, and then core selection is performed on all tasks of the previous frame in the global optimal core selection manner, thereby obtaining the optimal cores for all tasks of the previous frame.

The above-mentioned historical core-selection tasks obtained in the case of one frame are only exemplary. In actual implementations, they may also be tasks of multiple frames or tasks in any historical time period. In some implementations, tasks in a current time period of the terminal device are at least partially the same as tasks in a historical time period of the terminal device.

It is noted that the historical time period may be a preset time period, such as N frames preceding the current frame, one second before the current frame, or any specified time period. There is no specific limitation thereto, and the time range of the historical core-selection tasks may be determined according to actual needs.

After determining the historical time period, all tasks within the historical time period that have undergone core selection may be used as historical core-selection tasks. These core-selection tasks may be sorted in different orders, and core selection is performed on the tasks according to each sorted order. A sorted order with the lowest system energy consumption is determined, and the core selection result corresponding to this sorted order is used as the optimal core for each of the historical core-selection tasks.

In the task scheduling method provided in the embodiments of the present disclosure, core selection is performed on the multiple historical core-selection tasks in the global optimal core selection manner, and an optimal core for each historical core-selection task is thus obtained. Since the global optimal core selection manner may enable optimal cores selected for individual historical core-selection tasks that result in the lowest system energy consumption to be obtained, the processor can work with the global lowest power consumption, thereby reducing the power consumption of the processor and decreasing the loss of energy efficiency of the processor.

A feasible implementation of determining the optimal cores for the historical core-selection tasks as provided in the embodiments of the present disclosure is explained below.

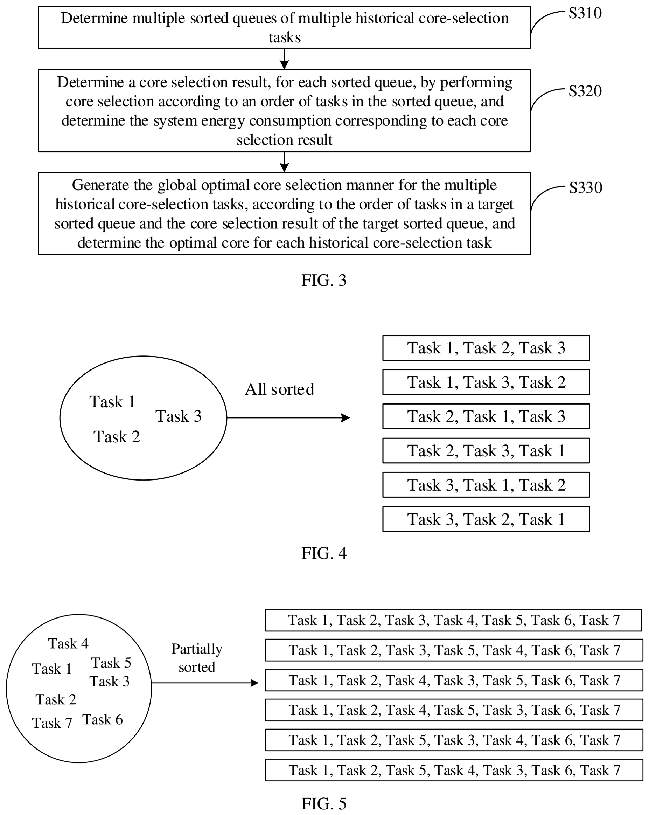

FIG. 3 is a schematic flowchart of determining the optimal cores for historical core-selection tasks as provided in the embodiments of the present disclosure. As illustrated in FIG. 3, the obtaining the optimal core for each historical core-selection task by performing core selection on the multiple historical core-selection tasks in the global optimal core selection manner includes operations 310-S330.

At S310, multiple sorted queues of the multiple historical core-selection tasks are determined.

It is noted that, after the historical time period is determined, multiple historical core-selection tasks within the historical time period may be sorted to obtain multiple sorted queues, where the obtained sorted queues may be fully sorted queues.

For example, if there are 2 historical core-selection tasks, there may be two sorted queues: (Task 1, Task 2) and (Task 2, Task 1). If there are 3 historical core-selection tasks, there may be six sorted queues: (Task 1, Task 2, Task 3), (Task 1, Task 3, Task 2), (Task 2, Task 1, Task 3), (Task 2, Task 3, Task 1), (Task 3, Task 1, Task 2), (Task 3, Task 2, Task 1). By analogy, for N historical core-selection tasks, N! sorted queues may be obtained.

After the multiple historical core-selection tasks are sorted in the above way, multiple sorted queues may be further obtained.

At S320, a core selection result is determined, for each sorted queue, by performing core selection according to an order of tasks in the sorted queue, and the system energy consumption corresponding to each core selection result is determined.

In some implementations, after the multiple sorted queues are obtained, core selection may be performed for each sorted queue according to the order of tasks in the sorted queue, and the current optimal core selection method (i.e., the EAS core selection method) may be used in the process of core selection, thereby obtaining the core selection result corresponding to each sorted queue.

For example, in the case of three historical core-selection tasks, for each of six corresponding sorted queues, the current optimal core selection method may be used to perform the core selection on the three historical core-selection tasks according to the order of the tasks in the sorted queue, and then the core selection result corresponding to each sorted queue may be obtained. In an example, in the case of three historical core-selection tasks, there may be six sorted queues: (Task 1, Task 2, Task 3), (Task 1, Task 3, Task 2), (Task 2, Task 1, Task 3), (Task 2, Task 3, Task 1), (Task 3, Task 1, Task 2), (Task 3, Task 2, Task 1). For the sorted queue (Task 1, Task 2, Task 3), the EAS core selection method is used to perform core selection on the three tasks according to the order of the tasks in this sorted queue, that is, the core selection is performed first on Task 1, then on Task 2, and then on Task 3, thereby obtaining the core selection result corresponding to this sorted queue. For other five sorted queue, the core selection may be performed on the three tasks in the same way. As such, the core selection result corresponding to each of the six sorted queues is obtained.

The core selection result includes the processor core selected for each historical core-selection task. For different sorted queues, different core selection results may be obtained by performing core selection using the current optimal core selection method.

It is noted that, after the core selection result for each sorted queue is determined, the system energy consumption of the core selection result corresponding to each sorted queue may be calculated. The system energy consumption may be determined by calculating the operating frequency of the entire system. The specific manner of determining the operating frequency of the system has been explained above, which will not be repeated here.

The higher the operating frequency of the entire system, the higher the system energy consumption; correspondingly, the lower the operating frequency of the entire system, the lower the system energy consumption. The system energy consumption may be determined by calculating the operating frequency of the entire system for each sorted queue.

At S330, the global optimal core selection manner for the multiple historical core-selection tasks is generated, according to the order of tasks in a target sorted queue and the core selection result of the target sorted queue; and the optimal core for each historical core-selection task is determined.

In some embodiments, after the core selection result for each sorted queue and the system energy consumption corresponding to each core selection result are determined, one sorted queue corresponding to the core selection result with the lowest system energy consumption may be used as the target sorted queue.

After the target sorted queue is determined, the core selection manner for the multiple historical core-selection tasks in the target sorted queue may be used as the global optimal core selection manner, the processor core selected for each historical core-selection task in the target sorted queue may be determined, and the processor core selected for each historical core-selection task in the target sorted queue may be used as the optimal core for the historical core-selection task.

It is noted that, for the task for which core selection is to be performed, it may be determined whether the task for which core selection is to be performed is the same as a historical core-selection task. If the task for which core selection is to be performed is the same as a historical core-selection task, it may be determined, for the task for which core selection is to be performed, whether it has an optimal core as determined through the above operations S310-S330. If it is determined that the task for which core selection is to be performed has an optimal core, the task for which core selection is to be performed may be processed with the optimal core.

In the task scheduling method provided in the embodiments of the present disclosure, multiple sorted queues of the multiple historical core-selection tasks are determined, the core selection result is determined, for each sorted queue, by performing core selection according to the order of tasks in the sorted queue, and the system energy consumption corresponding to each core selection result is determined. The global optimal core selection manner for the multiple historical core-selection tasks is generated according to the order of tasks in the target sorted queue and the core selection result of the target sorted queue, and the optimal core for each historical core-selection task is determined. The target sorted queue is one sorted queue among all sorted queues whose corresponding core selection result results in the lowest system energy consumption. By using the core selection manner of the target sorted queue as the global optimal core selection manner, the global optimal core selection result can be obtained, and the optimal core for each historical core-selection task can be determined from this core selection result, which improves the accuracy and rationality of the optimal core selection.

In some embodiments, the determining the multiple sorted queues of the multiple historical core-selection tasks includes: determining target tasks from the multiple historical core-selection tasks, where the target tasks include all tasks or partial tasks of the multiple historical core-selection tasks, and the partial tasks include at least two of the multiple historical core-selection tasks; and generating the multiple sorted queues according to different sorting manners of the target tasks.

It is noted that, in actual implementations, the multiple sorted queues may be obtained by sorting all historical core-selection tasks, or by sorting partial historical core-selection tasks. There is no specific limitation herein.

For example, the historical core-selection tasks include 10 tasks. The 10 tasks may be sorted to obtain multiple sorted queues. Alternatively, a part of the 10 tasks may be sorted. For example, the order of 5 tasks of the 10 tasks is kept unchanged, and the other 5 tasks are sorted to obtain multiple sorted queues.

It is noted that the partial tasks may be any two or more of all tasks. For example, if there are a total of seven tasks, i.e., Task 1-Task 7, the partial tasks may be three tasks including Task 3-Task 5.

In the sorting process, only the three tasks Task 3-Task 5 may be sorted, and the order of other tasks remains unchanged according to the original order.

It is noted that the target tasks may be all tasks or partial tasks. If the target tasks are partial tasks, the target tasks may be selected according to actual needs, for example, they are selected according to the type of the task, the current scenario of the terminal device, or other information.

For example, when the terminal device is running a game, its global optimal core selection manner is usually determined by Task 3-Task 5. In this case, the execution order of other tasks may be kept unchanged, and the order of Task 3-Task 5 may be changed, thereby obtaining multiple sorted queues.

In actual implementations, for different application scenarios, the tasks that determine the global optimal core selection manner may be different. A corresponding mapping relationship may be set in advance, and the mapping relationship records an application scenario of the terminal device and the serial numbers of tasks affecting the global optimal core selection manner in the application scenario. Then, based on an actual application scenario, the serial numbers of tasks corresponding to the scenario may be determined, and the tasks corresponding to the determined serial numbers may be used as the target tasks.

In the task scheduling method provided in the embodiments of the present disclosure, target tasks may be determined from the multiple historical core-selection tasks, where the target tasks include all tasks or partial tasks of the multiple historical core-selection tasks, and the partial tasks include at least two of the multiple historical core-selection tasks; and multiple sorted queues may be generated according to different sorting manners of the target tasks. All tasks or partial tasks may be selected according to the actual application scenario, and then the sorting may be performed based on the selected target tasks. In the case of sorting only partial tasks, the calculation amount for determining the sorting can be reduced, and the used computing power can be reduced.

The specific sorting methods respectively used when the target tasks include all tasks and when the target tasks include partial tasks are explained below.

In some embodiments, when the target tasks includes the all tasks, the generating multiple sorted queues according to different sorting manners of the target tasks includes: based on all tasks of the multiple historical core-selection tasks, generating all sorting manners of the all tasks, and obtaining a sorted queue corresponding to each of the sorting manners.

FIG. 4 is a schematic flowchart of determining sorted queues according to all tasks as provided in the embodiments of the present disclosure. As illustrated in FIG. 4, a process of determining multiple sorted queues when the target tasks include all tasks is shown.

For example, all historical core-selection tasks may be sorted. If there are N historical core-selection tasks, N! sorted queues may be obtained.

FIG. 4 takes the sorting of 3 historical core-selection tasks as an example. For example, if there are Task 1-Task 3, six different sorted queues as shown in FIG. 4 may be obtained.

In some embodiments, when the target tasks include partial tasks, the generating multiple sorted queues according to different sorting manners of the target tasks includes: determining an execution order of the partial tasks; and while keeping the execution order of other tasks of the multiple historical core-selection tasks unchanged, adjusting the execution order of the partial tasks, generating all sorting manners for the partial tasks, and obtaining a sorted queue corresponding to each of the sorting manners.

FIG. 5 is a schematic flowchart of determining sorted queues according to partial tasks as provided in the embodiments of the present disclosure. As illustrated in FIG. 5, a process of determining multiple sorted queues when the target tasks include partial tasks is shown.

For example, partial tasks of multiple historical core-selection tasks may be sorted. If there are N historical core-selection tasks, M historical core-selection tasks may be used as the target tasks, and M! sorted queues may be obtained, where M is greater than or equal to 2 and smaller than N.

FIG. 5 takes the sorting of 7 historical core-selection tasks as an example. Among the 7 historical core-selection tasks, three tasks including Task 3-Task 5 may be the target tasks. In the sorting process, only Task 3-Task 5 may be sorted, and six different sorted queues as shown in FIG. 5 may be obtained.

It is noted that, in the process of sorting the partial tasks, the execution order of the partial tasks may be adjusted, while keeping the execution order of other tasks among the multiple historical core-selection tasks unchanged. For example, the execution order of four tasks including Task 1-Task 2 and Task 6-Task 7 may be kept unchanged, and only the execution order of Task 3-Task 5 may be adjusted, thereby obtaining multiple sorted queues.

In the task scheduling method provided in the embodiments of the present disclosure, when the target tasks include the all tasks, based on all tasks of the multiple historical core-selection tasks, all sorting manners of the all tasks are generated and a sorted queue corresponding to each sorting manner is obtained. When the target tasks include partial tasks, the execution order of the partial tasks is adjusted while keeping the execution order of other tasks among the multiple historical core-selection tasks unchanged, all sorting manners for the partial tasks are generated, and a sorted queue corresponding to each sorting manner is obtained. Depending on different tasks included in the target tasks, different manners can be used to determine the sorted queues in the case of all tasks and in the case of partial tasks. As such, all the required sorted queues can be obtained, which improves the comprehensiveness and efficiency of determining multiple sorted queues.

In the process of processing the task for which core selection is to be performed with the optimal core, it may be further determined whether a condition of using the optimal core is met. An optional implementation thereof is as follows.

In some embodiments, the processing the task for which core selection is to be performed with the optimal core includes: processing the task for which core selection is to be performed with the optimal core, in response to a preset condition being met.

The preset condition includes at least one of the following: the optimal core is in a non-fault state; a difference between the load of the task for which core selection is to be performed and the load of a same task in the historical core-selection tasks is smaller than or equal to a preset threshold; the number of tasks executed by the processor where the optimal core is located meets a scheduling requirement; and the processor where the optimal core is located is not in a sleep state.

It is noted that the optimal core being in a non-fault state means that the optimal core can work normally, for example, it is in a normal power-on state and has no damage.

The difference between the load of the task for which core selection is to be performed and the load of the same task in the historical core-selection tasks being smaller than or equal to a preset threshold means that, the difference between the load of a task in the current running process and the load of a same task in the historical core-selection tasks is smaller than or equal to the preset threshold.

For example, the current load of Task 1 is X1, the load of Task 1 in the historical core-selection tasks is X2, and the preset threshold is P. If $|X1\text{-}X2| \leq P$, it may be determined that the difference between the load of the task for which core selection is to be performed and the load of a same task in the historical core-selection tasks is smaller than or equal to the preset threshold. Correspondingly, if $|X1\text{-}X2| > P$, it may be determined that the difference between the load of the task for which core selection is to be performed and the load of the same task in the historical core-selection tasks is not smaller than or equal to the preset threshold.

The number of tasks executed by the processor where the optimal core is located meeting the scheduling requirement means that, the number of tasks executed by the processor where the optimal core is located is within a range that it can handle. If it exceeds this range, it may be determined that the processor where the optimal core is located cannot handle the task for which core selection is to be performed.

The processor where the optimal core is located not being in a sleep state means that, the optimal core is currently in an activated state. If the processor is in a sleep state, it cannot handle the task for which core selection is to be performed.

It is noted that, in actual implementations, the task for which core selection is to be performed may be processed with the optimal core, when all the above multiple conditions are met, or when some selected ones of the conditions are met, which is not limited herein. The following explains the process of processing the task for which core selection is to be performed with the optimal core as provided in the embodiments of the present disclosure, in a case where all the above multiple conditions need to be met.

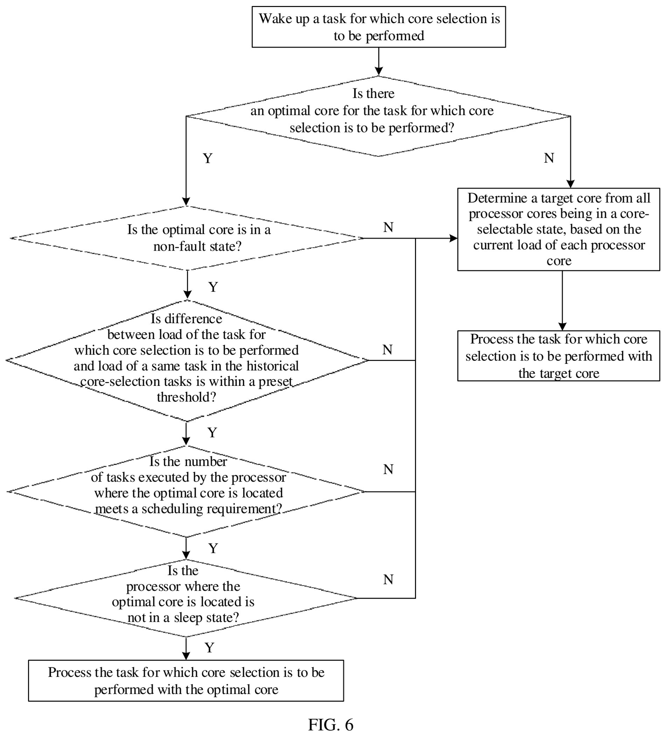

FIG. 6 is a schematic flowchart of processing the task for which core selection is to be performed with the optimal core as provided in the embodiments of the present disclosure. As illustrated in FIG. 6, after a task for which core selection is to be performed is woken up, it may be determined whether there is an optimal core for the task for which core selection is to be performed. If it is determined that there is an optimal core for the task for which core selection is to be performed, it may be further determined whether the optimal core is in a non-fault state, whether the difference between the load of the task for which core selection is to be performed and the load of a same task in the historical core-selection tasks is smaller than or equal to a preset threshold, whether the number of tasks executed by the processor where the optimal core is located meets the scheduling requirement, and whether the processor where the optimal core is located is not in a sleep state.

If all the above determination conditions are met, the optimal core may execute the task for which core selection is to be performed. If any of the above conditions is not met, or if there is no optimal core for the task for which core selection is to be performed, a target core may be determined from all processor cores being in a core-selectable state, based on the current load of each processor core, where the target core is a processor core selected in such a manner that a lowest current system energy consumption would be resulted when the task for which core selection is to be performed is executed with the selected processor core; and the task for which core selection is to be performed is processed with the target core.

That is to say, if any one of the conditions is not met or there is no optimal core for the task for which core selection is to be performed, an optimal core may be selected by using the EAS solution, and the target core determined through the EAS solution may be used to process the task for which core selection is to be performed.

The core-selectable state is a selection state of the processor core, and the selection state of the processor core may include a core-selectable state and a core-unselectable state. The core-selectable state indicates that the processor core is capable of being selected in the core selection process, and the core-unselectable state indicates that the processor core is incapable of being selected in the core selection process.

In the task scheduling method provided in the embodiments of the present disclosure, the task for which core selection is to be performed is processed with the optimal core, when the optimal core is in a non-fault state, the difference between the load of the task for which core selection is to be performed and the load of the same task in the historical core-selection tasks is smaller than or equal to a preset threshold, the number of tasks executed by the processor where the optimal core is located meets the scheduling requirement, and the processor where the optimal core is located is not in a sleep state. This can avoid the task for which core selection is to be performed from being assigned to the optimal core when the optimal core does not meet the usage condition(s), thereby improving the accuracy and rationality of the assignment of the task for which core selection is to be performed. Moreover, if the conditions are not met, the EAS solution may also be used to continue the selection of the target core, ensuring that the task for which core selection is to be performed can be executed by the processor core.

The following explains an optional implementation of determining the selection state of a processor core as provided in the embodiment of the present disclosure.

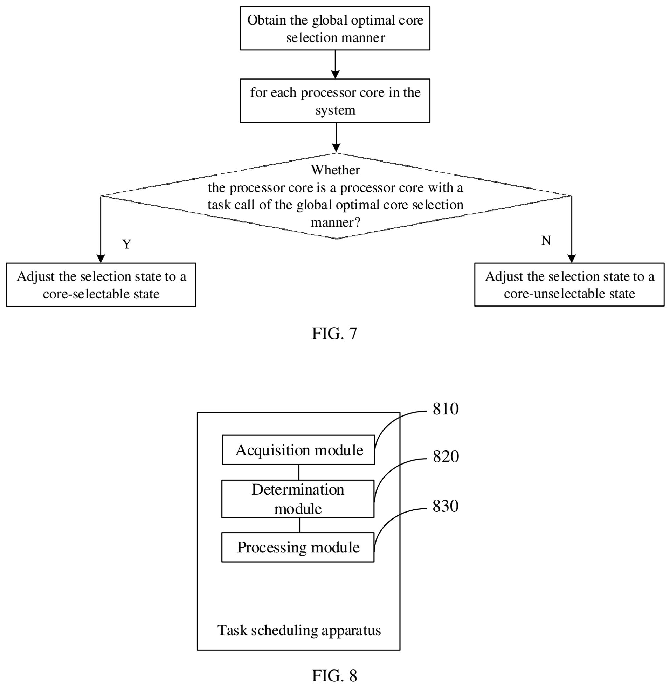

FIG. 7 is a schematic flowchart of determining the selection state of a processor core as provided in the embodiments of the present disclosure. As illustrated in FIG. 7, before determining the target core from all processor cores being in the core-selectable state based on the current load of each processor core, the method further includes: adjusting the selection state of a processor core with a task call of the global optimal core selection manner to the core-selectable state; and adjusting the selection state of a processor core without a task call of the global optimal core selection manner to the core-unselectable state.

It is noted that, after the global optimal core selection manner is obtained, for each processor core in the system, it may be determined whether the processor core is a processor core with a task call of the global optimal core selection manner.

For each processor core, if the processor core is a processor core with a task call of the global optimal core selection manner, the selection state of the processor core may be adjusted to the core-selectable state; and if the processor core is a processor core without a task call of the global optimal core selection manner, the selection state of the processor core may be adjusted to the core-unselectable state.

In the core-selectable state, the processor core may be in an activated state, and it may be selected in the core selection process for a task. In the core-unselectable state, the processor core may be in an isolated state, and it will be skipped and cannot be selected in the core selection process for a task.

For example, if the processor cores include five core processors, i.e., CPU1-CPU5, and the core processors with a task call of the global optimal core selection manner are CPU3, CPU4, and CPU5, the selection state of each of CPU1 and CPU2 may be the core-unselectable state, and the selection state of each of CPU3, CPU4, and CPU5 may be the core-selectable state.

It is noted that the core-selectable state may facilitate the selection of a respective processor core, and the core-unselectable state may facilitate the respective processor core to enter an energy-saving state, which can reduce the power consumption.

In the task scheduling method provided in the embodiments of the present disclosure, the selection state of a processor core with a task call of the global optimal core selection manner may be adjusted to the core-selectable state, and the selection state of a processor core without a task call of the global optimal core selection manner may be adjusted to the core-unselectable state. Thus, the selection state of each processor core can be marked quickly, and the processor core may be in the corresponding selection state, which is convenient for core selection and reduces the energy consumption.

It is understandable that, although the operations in the above flowcharts are shown in sequence according to the arrows, these operations are not necessarily executed in sequence indicated by the arrows. Unless explicitly stated herein, these operations are not executed in a strict order, and they may be executed in other orders. Moreover, at least part of the operations in the above flowcharts may include multiple sub-operations or multiple stages. These sub-operations or stages are not necessarily executed at the same time, but may be executed at different times. These sub-operations or stages are not necessarily executed in sequence, but may be executed alternately or in turn with at least part of the sub-operations or stages of other operations.

Based on the foregoing embodiments, the embodiments of the present disclosure provide a task scheduling apparatus. Each module included in the apparatus and each unit included in each module may be implemented by a processor; of course, they may also be implemented by a specific logic circuit. In an implementation, the processor may be a central processing unit (CPU), a microprocessor (MPU), a digital signal processor (DSP), or a field programmable gate array (FPGA), etc.

FIG. 8 is a schematic structural diagram of the task scheduling apparatus provided in the embodiments of the present disclosure. As illustrated in FIG. 8, the task scheduling apparatus includes an acquisition module 810, a determination module 820, and a processing module 830.

The acquisition module 810 is configured to acquire a task for which core selection is to be performed.

The determination module 820 is configured to determine whether there is an optimal core for the task for which core selection is to be performed, where the optimal core is obtained by performing core selection in a global optimal core selection manner, and the global optimal core selection manner is a core selection manner that results in a lowest system energy consumption and that is obtained by performing core selection, in different orders, on multiple historical core-selection tasks.

The processing module 830 is configured to process the task for which core selection is to be performed with the optimal core, when there is an optimal core for the task for which core selection is to be performed.

In some embodiments, the processing module 830 is further configured to obtain an optimal core for each of the multiple historical core-selection tasks by performing core selection on the multiple historical core-selection tasks in the global optimal core selection manner, where each of the multiple historical core-selection task is a task in a historical time period.

In some embodiments, the processing module 830 is specifically configured to: determine multiple sorted queues of the multiple historical core-selection tasks; determine, for each of the multiple sorted queues, a core selection result by performing core selection according to the order of tasks in the sorted queue, and determine the system energy consumption corresponding to each core selection result; and generate, according to the order of tasks in a target sorted queue and the core selection result of the target sorted queue, the global optimal core selection manner for the multiple historical core-selection tasks, and determine the optimal core for each historical core-selection task, where the target sorted queue is a sorted queue among all sorted queues whose corresponding core selection result results in a lowest system energy consumption.

In some embodiments, the processing module 830 is specifically configured to: determine target tasks from the multiple historical core-selection tasks, where the target tasks include all tasks or partial tasks of the multiple historical core-selection tasks, and the partial tasks include at least two of the multiple historical core-selection tasks; and generate the multiple sorted queues according to different sorting manners of the target tasks.

In some embodiments, in a case where the target tasks include the all tasks, the processing module 830 is specifically configured to: generate all sorting manners of the all tasks according to the all tasks of the multiple historical core-selection tasks, and obtain a sorted queue corresponding to each sorting manner.

In some embodiments, in a case where the target tasks include the partial tasks, the processing module 830 is specifically configured to: determine an execution order of the partial tasks; and while keeping an execution order of other tasks of the multiple historical core-selection tasks unchanged, adjust the execution order of the partial tasks and generate all sorting manners for the partial tasks, and obtain a sorted queue corresponding to each sorting manner.

In some embodiments, the processing module 830 is specifically configured to process the task for which core selection is to be performed with the optimal core when a preset condition is met, where the preset conditions include at least one of the following: the optimal core is in a non-fault state; the difference between the load of the task for which core selection is to be performed and the load of a same task in the historical core-selection tasks is smaller than or equal to a preset threshold; the number of tasks executed by the processor where the optimal core is located meets a scheduling requirement; and the processor where the optimal core is located is not in a sleep state.

In some embodiments, the processing module 830 is further configured to: when the preset condition is not met or there is no optimal core for the task for which core selection is to be performed, determine, based on a current load of each processor core, a target core from all processor cores being in a core-selectable state, where the target core is a processor core selected in such a manner that a lowest current system energy consumption would be resulted in when the task for which core selection is to be performed is executed with the selected processor core; and process the task for which core selection is to be performed with the target core.

In some embodiments, the processing module 830 is further configured to adjust a selection state of a processor core with a task call of the global optimal core selection manner to the core-selectable state; and adjust the selection state of a processor core without a task call of the global optimal core selection manner to a core-unselectable state.

In the task scheduling apparatus provided in the embodiments of the present disclosure, a task for which core selection is to be performed is acquired, and it is determined whether there is an optimal core for the task for which core selection is to be performed. When there is an optimal core for the task for which core selection is to be performed, the task for which core selection is to be performed is processed with the optimal core. Since the optimal core is obtained by performing core selection in a global optimal core selection manner, and the global optimal core selection manner is a core selection manner that results in a lowest system energy consumption and that is obtained by performing core selection on multiple historical core-selection tasks in different orders, the processing the task for which core selection is to be performed with the optimal core can ensure that the processor works with the global lowest power consumption, thereby reducing the power consumption of the processor and decreasing the loss of energy efficiency of the processor.

The description of the apparatus embodiment above is similar to the description of the method embodiments above, and has the same beneficial effects as the method embodiments. For technical details not disclosed in the apparatus embodiment of the present disclosure, reference may be made to the description of the method embodiments of the present disclosure.

It is noted that the division of modules in the task scheduling apparatus shown in FIG. 8 in the embodiments of the present disclosure is schematic, and it is only a logical function division. In actual implementations, there may be another division manner. In addition, the individual functional units in each embodiment of the present disclosure may be integrated into one processing unit, or each unit may exist physically alone, or two or more units may be integrated into one unit. The integrated unit may be implemented in hardware, or in software functional units, or in a combination of software and hardware.

It is noted that, in the embodiments of the present disclosure, when the above method(s) is implemented in software function modules and sold or used as an independent product, it may also be stored in a non-transitory computer-readable storage medium. Based on this understanding, the technical solution of the embodiments of the present disclosure essentially or the part thereof that contributes to the related art may be embodied in a software product. The computer software product is stored in a storage medium and includes several instructions to enable an electronic device to execute all or part of the operations of the method described in each embodiment of the present disclosure. The aforementioned storage medium includes: a USB flash drive, a mobile hard disk, a read-only memory (ROM), a magnetic disk, an optical disk, and other various media that can store program codes. In this way, the embodiments of the present disclosure are not limited to any specific combination of hardware and software.

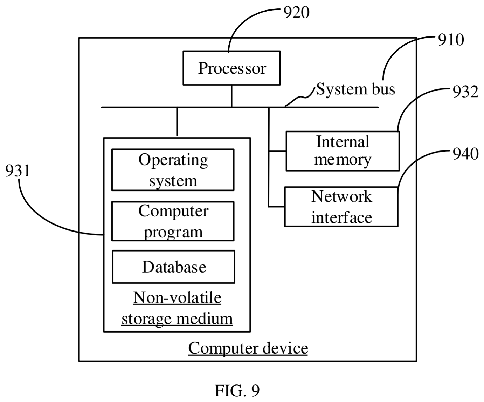

FIG. 9 is a schematic structural diagram of a computer device provided in the embodiments of the present disclosure. As illustrated in FIG. 9, a computer device is provided by the embodiments of the present disclosure, and the computer device may be the above-mentioned terminal device. The internal structure of the computer device may be as shown in FIG. 9. The computer device includes a processor 920, a memory, and a network interface 940 that are connected through a system bus 910. The processor 920 of the computer device is used to provide computing and control capabilities, and the processor 920 may include multiple processor cores, and each processor core may execute its assigned task(s). The memory of the computer device includes a non-volatile storage medium 931 and an internal memory 932. The non-volatile storage medium 931 stores an operating system, a computer program, and a database. The internal memory 932 provides an environment for the operation of the operating system and the computer program in the non-volatile storage medium 931. The database of the computer device is used to store data. The network interface 940 of the computer device is used to communicate with an external terminal through a network connection. The computer program is executed by the processor 920 to implement the above method(s).

The embodiments of the present disclosure provide a non-transitory computer-readable storage medium having a computer program stored thereon. The computer program, when being executed by a processor, causes the operations in the methods provided in the above embodiments to be implemented.

The embodiments of the present disclosure provide a computer program product containing instructions which, when running on a computer, cause the computer to execute the operations in the methods provided in the above method embodiments.

Those skilled in the art can understand that the structure shown in FIG. 9 is only a block diagram of a part of structures related to the solution of the present disclosure, and does not constitute a limitation on the computer device to which the solution of the present disclosure is applied. A specific computer device may include more or fewer components than those shown in the figure, or combine some components, or have different component arrangements.

In some embodiments, the task scheduling apparatus provided in the present disclosure may be implemented in a computer program, and the computer program may run on a computer device as shown in FIG. 9. The memory of the computer device may store each program module that constitutes the task scheduling apparatus. The computer program instituted by the individual program modules causes the processor to execute the operations in the method of each embodiment of the present disclosure as described herein.

It is noted that the descriptions of the above storage medium and device embodiments are similar to the descriptions of the above method embodiments, and have the same beneficial effects as the method embodiments. For technical details not disclosed in the storage medium and device embodiments of the present disclosure, reference may be made to the descriptions of the method embodiments of the present disclosure.

It is understandable that references to "one embodiment" or "an embodiment" or "some embodiments" in the specification mean that specific features, structures or characteristics related to the embodiment is included in at least one embodiment of the present disclosure. Therefore, the appearances of "in one embodiment" or "in an embodiment" or "in some embodiments" in various places of the specification do not necessarily refer to a same embodiment. Furthermore, these specific features, structures or characteristics may be combined in any suitable manner into one or more embodiments. It is understandable that, in various embodiments of the present disclosure, the size of the serial number of the above-mentioned processes does not mean the execution order, and the execution order of each process should be determined according to its functions and inherent logics, and should not constitute any limitation on the implementation process of the embodiments of the present disclosure. The serial numbers of the embodiments of the present disclosure are only for description, and do not represent the advantages and disadvantages of the embodiments. The above description of various embodiments tends to emphasize the differences between various embodiments, and their same or similar parts may be referred to each other, which will not be repeated here for the sake of brevity.

It is understandable that the term "and/or" herein describes only an association relationship of associated objects, which indicates that there may be three relationships. For example, object A and/or object B may indicate that object A exists alone, object A and object B exist at the same time, and object B exists alone.

It is noted that, terms "include", "comprise" or any other variant thereof herein are intended to cover non-exclusive inclusion, so that a process, method, article or device including a series of elements not only includes those elements but also includes other elements not explicitly listed, or further includes elements inherent to such process, method, article or device. Without more restrictions, an element defined by a sentence "including one..." does not exclude the existence of other identical elements in the process, method, article or device including the element.

In several embodiments of the present disclosure, it is understandable that the disclosed device and method may be implemented in other ways. The embodiments described above are only schematic. For example, the division of the modules is only a logical function division. In actual implementations, there may be another division manner. For example, multiple modules or components may be combined or integrated into another system, or some features may be ignored or not executed. In addition, the shown or discussed mutual coupling, direct coupling, or communication connection between various components may be an indirect coupling or communication connection through some interfaces, devices, or modules, and may be in an electrical or mechanical form or in other forms.

The modules described as separate components may or may not be physically separated, and the components shown as modules may or may not be physical modules. They may be located in one place, or distributed on multiple network modules. Some or all of the modules may be selected according to actual needs to achieve the purpose of the solution of the embodiments.

In addition, the individual functional modules in each embodiment of the present disclosure may be integrated into one processing unit, or each unit may exist alone physically, or two or more units may be integrated into one unit. The integrated unit may be implemented in hardware or in combination of hardware and software function units.

Those of ordinary skill in the art may understand that all or part of the operations in the above method embodiments may be implemented by instructing relevant hardware through a program. The program may be stored in a non-transitory computer-readable storage medium. The program, when being executed, causes the operations of the above method embodiments. The storage medium includes a removable storage device, a ROM, a magnetic disk, an optical disk, and other various media capable of storing program codes.

Alternatively, when the above integrated unit is implemented in software function modules and sold or used as an independent product, it may also be stored in a computer-readable storage medium. Based on this understanding, the technical solution of the embodiments of the present disclosure essentially or the part thereof that contributes to the related art may be embodied in a software product. The computer software product is stored in a storage medium and includes several instructions to enable an electronic device to execute all or part of the operations of the method described in each embodiment of the present disclosure. The storage medium includes: a removable storage device, a ROM, a magnetic disk, an optical disk, and other various media that can store program codes.

The methods disclosed in several method embodiments of the present disclosure may be arbitrarily combined without conflict to obtain a new method embodiment.

The features disclosed in several product embodiments of the present disclosure may be arbitrarily combined without conflict to obtain a new product embodiment.

The features disclosed in several method or device embodiments of the present disclosure may be arbitrarily combined without conflict to obtain a new method embodiment or device embodiment.

The foregoing merely illustrates the embodiments of the present disclosure, but the protection scope of the present disclosure is not limited thereto. Variation or substitutions, that can be easily conceived by any person familiar with this technical field within the technical scope disclosed in the disclosure, should all fall within the protection scope of the present disclosure. Therefore, the protection scope of the present disclosure should be subject to the appended claims.

## Claims

1. A task scheduling method, comprising:

   acquiring (S210) a task for which core selection is to be performed;
   determining (S220) whether there is an optimal core for the task, wherein the optimal core is obtained by performing core selection in a global optimal core selection manner, and the global optimal core selection manner is a core selection manner that results in a lowest system energy consumption and that is obtained by performing core selection, in different orders, on a plurality of historical core-selection tasks; and
   in response to determining that there is an optimal core for the task, processing (S230) the task with the optimal core.

2. The method of claim 1, wherein before acquiring the task for which core selection is to be performed, the method further comprises:
   obtaining an optimal core for each of the plurality of historical core-selection tasks, by performing core selection on the plurality of historical core-selection tasks in the global optimal core selection manner, wherein each of the plurality of historical core-selection task is a task in a historical time period that has historically undergone core selection.

3. The method of claim 2, wherein the obtaining the optimal core for each of the plurality of historical core-selection tasks by performing core selection on the plurality of historical core-selection tasks in the global optimal core selection manner, comprises:

   determining (S310) a plurality of sorted queues of the plurality of historical core-selection tasks;
   determining (S320), for each of the plurality of sorted queues, a core selection result by performing core selection on the plurality of historical core-selection tasks according to an order of tasks in the sorted queue, and determining (S320) a system energy consumption corresponding to each core selection result; and
   generating the global optimal core selection manner for the plurality of historical core-selection tasks, according to an order of tasks in a target sorted queue and the core selection result corresponding to the target sorted queue, and determining the optimal core for each of the plurality of historical core-selection tasks, wherein the target sorted queue is a sorted queue among the plurality of sorted queues whose corresponding core selection result results in a lowest system energy consumption.

4. The method of claim 3, wherein the determining the plurality of sorted queues of the plurality of historical core-selection tasks comprises:

   determining target tasks from the plurality of historical core-selection tasks, wherein the target tasks comprise all tasks or partial tasks of the plurality of historical core-selection tasks, and the partial tasks comprise at least two of the plurality of historical core-selection tasks; and
   generating the plurality of sorted queues, according to different sorting manners of the target tasks.

5. The method of claim 4, wherein in a case where the target tasks comprise all tasks of the plurality of historical core-selection tasks, the generating the plurality of sorted queues according to different sorting manners of the target tasks comprises:
   based on all tasks of the plurality of historical core-selection tasks, determining all sorting manners of the all tasks, and obtaining a sorted queue corresponding to each of the sorting manners.

6. The method of claim 4, wherein in a case where the target tasks comprise the partial tasks, the generating the plurality of sorted queues according to different sorting manners of the target tasks comprises:

   determining an execution order of the partial tasks; and
   while keeping an execution order of other tasks of the plurality of historical core-selection tasks unchanged, adjusting the execution order of the partial tasks, generating all sorting manners for the partial tasks, and obtaining a sorted queue corresponding to each of the sorting manners.

7. The method of any one of claims 1-6, wherein the processing the task with the optimal core, comprises:

   processing the task with the optimal core, in response to a preset condition being met,
   wherein the preset condition comprises at least one of: the optimal core is in a non-fault state; a difference between a load of the task and a load of a same task in the historical core-selection tasks is smaller than or equal to a preset threshold; the number of tasks executed by a processor where the optimal core is located meets a scheduling requirement; and the processor where the optimal core is located is not in a sleep state.

8. The method of any one of claims 1-7, further comprising:

   in response to the preset condition being not met or in response to there being no optimal core for the task, determining, based on a current load of each processor core, a target core from all processor cores being in a core-selectable state, wherein the target core is a processor core that is selected in such a manner that a lowest current system energy consumption would be resulted in when the task is executed with the selected processor core; and
   processing the task with the target core.

9. The method of claim 8, wherein before determining, based on the current load of each processor core, the target core from all processor cores being in the core-selectable state, the method further comprises:

   adjusting a selection state of each processor core with a task call of the global optimal core selection manner to the core-selectable state; and
   adjusting a selection state of each processor core without a task call of the global optimal core selection manner to a core-unselectable state.

10. The method of any one of claims 1-9, wherein the processing the task with the optimal core in response to determining that there is the optimal core for the task, comprises:
    in response to determining that there are a plurality of optimal cores for the task, processing the task with any one of the plurality of optimal cores.

11. A task scheduling apparatus, comprising:

    an acquisition module (810), configured to acquire a task for which core selection is to be performed;
    a determination module (820), configured to determine whether there is an optimal core for the task, wherein the optimal core is obtained by performing core selection in a global optimal core selection manner, and the global optimal core selection manner is a core selection manner that results in a lowest system energy consumption and that is obtained by performing core selection, in different orders, on a plurality of historical core-selection tasks; and
    a processing module (830), configured to process the task with the optimal core, when there is the optical core for the task.

12. A computer device, comprising a memory and a processor (920), wherein the memory stores a computer program executable on the processor (920), and the computer program, when being executed by the processor (920), causes the method of any one of claims 1-10 to be implemented.

13. A computer-readable storage medium storing a computer program thereon, wherein the computer program, when being executed by a processor (920), causes the processor (920) to implement the method of any one of claims 1-10.

┌─────────────────┐    ┌─────────────────┐    ┌─────────────────┐
│  ⌐100           │    │  ⌐100           │    │  ⌐100           │

Processor core A     Processor core B     Processor core C

Task 1              Task 3              Task 4    Task 5
      Task 2

FIG. 1

┌──────────────────────────────────────────┐
│ Acquire a task for which core selection is to be │  ⌐S210
│ performed                                  │
└──────────────────────────────────────────┘
                      ↓
┌──────────────────────────────────────────┐
│ Determine whether there is an optimal core for │  ⌐S220
│ the task for which core selection is to be │
│ performed                                  │
└──────────────────────────────────────────┘
                      ↓
┌──────────────────────────────────────────┐
│ In response to determining that there is an optimal │  ⌐S230
│ core for the task for which core selection is to be │
│ performed, process the task for which core │
│ selection is to be performed with the optimal core │
└──────────────────────────────────────────┘

FIG. 2

| Determine multiple sorted queues of multiple historical core-selection tasks | S310 |

↓

| Determine a core selection result, for each sorted queue, by performing core selection according to an order of tasks in the sorted queue, and determine the system energy consumption corresponding to each core selection result | S320 |

↓

| Generate the global optimal core selection manner for the multiple historical core-selection tasks, according to the order of tasks in a target sorted queue and the core selection result of the target sorted queue, and determine the optimal core for each historical core-selection task | S330 |

FIG. 3

Task 1
Task 3
Task 2

All sorted →

| Task 1, Task 2, Task 3 |
| Task 1, Task 3, Task 2 |
| Task 2, Task 1, Task 3 |
| Task 2, Task 3, Task 1 |
| Task 3, Task 1, Task 2 |
| Task 3, Task 2, Task 1 |

FIG. 4

Task 4
Task 1  Task 5
Task 3
Task 2
Task 7  Task 6

Partially sorted →

| Task 1, Task 2, Task 3, Task 4, Task 5, Task 6, Task 7 |
| Task 1, Task 2, Task 3, Task 5, Task 4, Task 6, Task 7 |
| Task 1, Task 2, Task 4, Task 3, Task 5, Task 6, Task 7 |
| Task 1, Task 2, Task 4, Task 5, Task 3, Task 6, Task 7 |
| Task 1, Task 2, Task 5, Task 3, Task 4, Task 6, Task 7 |
| Task 1, Task 2, Task 5, Task 4, Task 3, Task 6, Task 7 |

FIG. 5

Wake up a task for which core selection is to be performed

Is there an optimal core for the task for which core selection is to be performed?

Y

N

Is the optimal core is in a non-fault state?

N

Determine a target core from all processor cores being in a core-selectable state, based on the current load of each processor core

Y

Is difference between load of the task for which core selection is to be performed and load of a same task in the historical core-selection tasks is within a preset threshold?

N

Process the task for which core selection is to be performed with the target core

Y

Is the number of tasks executed by the processor where the optimal core is located meets a scheduling requirement?

N

Y

Is the processor where the optimal core is located is not in a sleep state?

N

Y

Process the task for which core selection is to be performed with the optimal core

FIG. 6

Obtain the global optimal core
selection manner

↓

for each processor core in the
system

↓

Whether
the processor core is a processor core with a
task call of the global optimal core selection
manner?

Y → Adjust the selection state to a
core-selectable state

N → Adjust the selection state to a
core-unselectable state

FIG. 7

Acquisition module — 810

Determination
module — 820

Processing module — 830

Task scheduling apparatus

FIG. 8

FIG. 9

## EUROPEAN SEARCH REPORT

Europäisches
Patentamt
European
Patent Office
Office européen
des brevets

**Application Number**

EP 25 21 1341

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/083383 A1 (INTEL CORPORATION) 23 March 2017 (2017-03-23) * abstract * * paragraphs [0001], [0014] - [0017], [0020], [0026] - [0027], [0030] - [0034], [0037] - [0039], [0042] - [0045], [0055] - [0056] * ----- | 1-13 | INV. G06F9/48 G06F9/50 |
| X | US 2020/142754 A1 (SAMSUNG ELECTRONICS CO., LTD.) 7 May 2020 (2020-05-07) * abstract * * paragraphs [0005] - [0006], [0019] - [0021], [0024] - [0029] * ----- | 1-13 | |
| X | US 2024/338250 A1 (SAMSUNG ELECTRONICS CO., LTD.) 10 October 2024 (2024-10-10) * abstract * * paragraphs [0005] - [0006], [0022] - [0029], [0038], [0044] - [0049] * ----- | 1-13 | |
| A | WO 2014/105058 A1 (INTEL CORPORATION) 3 July 2014 (2014-07-03) * the whole document * ----- | 1-13 | TECHNICAL FIELDS SEARCHED (IPC) G06F |

The present search report has been drawn up for all claims

| Place of search | Date of completion of the search | Examiner |
|---|---|---|
| The Hague | 5 March 2026 | Tomàs Blanch, F |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
......................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 21 1341

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2026

| Patent document cited in search report | Publication date | Patent family member(s) | | Publication date |
|---|---|---|---|---|
| US 2017083383 A1 | 23-03-2017 | US | 2017083383 A1 | 23-03-2017 |
| | | WO | 2017052737 A1 | 30-03-2017 |
| US 2020142754 A1 | 07-05-2020 | CN | 111158868 A | 15-05-2020 |
| | | DE | 102019117800 A1 | 07-05-2020 |
| | | KR | 20200052558 A | 15-05-2020 |
| | | US | 2020142754 A1 | 07-05-2020 |
| US 2024338250 A1 | 10-10-2024 | KR | 20240150909 A | 17-10-2024 |
| | | US | 2024338250 A1 | 10-10-2024 |
| WO 2014105058 A1 | 03-07-2014 | CN | 105144082 A | 09-12-2015 |
| | | CN | 111522585 A | 11-08-2020 |
| | | DE | 112012007115 T5 | 20-08-2015 |
| | | US | 2014189302 A1 | 03-07-2014 |
| | | WO | 2014105058 A1 | 03-07-2014 |

For more details about this annex : see Official Journal of the European Patent Office, No. 12/82